# EUROPEAN PATENT APPLICATION

(11) **EP 2 224 333 A1**
(43) Date of publication of application: **01.09.2010**
(21) Application number: 09154022.9
(22) Date of filing: 27.02.2009
(51) Int. Cl.: G06F 9/44

(54) **Method, apparatus and system for supporting polymorphic elements at run-time in portable computing devices**

(71) Applicant: RESEARCH IN MOTION LIMITED, Waterloo, Ontario N2L 3W8 (CA)
(72) Inventor: Mateescu, Daniel, Mississauga Ontario L4W 0B5 (CA); Bibr, Viera, Mississauga Ontario L4W 0B5 (CA); Wallis, Kenneth, Mississauga Ontario L4W 0B5 (CA)
(74) Representative: MERH-IP Matias Erny Reichl Hoffmann

(57) **Abstract**

Various methods, apparatuses and systems for supporting polymorphic elements at run-time in portable computing devices are provided. One embodiment includes a development tool that can be incorporated into an integrated development environment. (IDE) The development tool is configured to detect when a programming instruction corresponding to a polymorphic element is received. Upon such detection, the developer operating the IDE is prompted to provide specific mapping information such that an application that is finally generated using the IDE avoids or reduces the use of polymorphic elements and thereby reduce computing resource stresses on the device on which such an application is ultimately deployed.

## Description

### FIELD

The present specification relates generally to computing and more specifically relates to method, apparatus and system for supporting polymorphic elements at run-time in portable computing devices.

### BACKGROUND

There are many web services around using polymorphic elements. Examples of polymorphic elements include "xsd:any" and "xsd:anyType", as per the extended Markup Language (XML) Schema specification. In the web services context, "any" and "anyType" represent design-time placeholders for various instances of XML Schema types which are to be passed at runtime. Such polymorphic elements can provide a versatile way of implementing a loose coupling between components and a flexible polymorphism in the XML schemas. As a result, web services often use these schemas.

Increasingly, portable computing device applications often communicate with web services. If these web services use polymorphic elements in their response messages or notifications, the flexibility of these structures comes with a price, as the polymorphic elements need to be parsed on the portable computing device. Yet, portable computing devices often have scarce storage and processing resources in the mobile world, and thus such parsing can overburden the portable computing device and potentially add to the burden on the wireless network connected to that portable computing device.

### SUMMARY

An aspect of the specification provides a computer implemented method of developing an application for a computing device that accesses backend services, said method comprising:
receiving input data via an input device of said computing apparatus;
processing said input data in a software programming tool to determine said input data can be recognized by said software programming tool as a ploymorphic;
generating a query from said software programming tool at an output device of said computing apparatus asking if a mapping to possible choices for a recognized polymorphic element is known;
receiving response data via said input device indicating whether or not said mapping is known; and
if said mapping is not known then further generating said application using said software programming tool using said polymorphic element; and
if said mapping is known then receiving further response data via said input device identifying said mapping; and
further generating said application using said software programming tool using one or more uniform elements in substitution for said polymorphic element.

The polymorphic element can be one of an any or anyType element.

The application can generated with a choice type that is associated with a list of data components and a schema respective to said backend services.

Upon recognizing said polymorphic element in the development environment, the method can also comprise collecting said response data for said mapping into an application global variable, the application global variable also being incorporated into said generating of said application.

Upon recognizing the polymorphic element in the development environment, the method can also comprise using said mapping to generate data components for incorporation into said application.

The mapping can comprise defined possible values which are incorporated into a script in place of said polymorphic element; said script being incorporated into said application. The script can be a European Computer Manufacturers Association (ECMA) script.

The script can be configured to be associated with the arrival of a message at said computing device from said backend services.

The message can be a response message or notification from said backend services.

The method can further comprise generating a mediation module for deployment in a mediation server; said mediation server residing between said device and said backend services; said mediation module including a data binding module corresponding to said mapping.

The data binding module can be configured to record the association of each choice with its list of data components.

Another aspect of the specification provides a computer having one or input devices, one or more output devices, and storage interconnected by a processor, said processor configured to perform any of the methods of the foregoing.

Another aspect of the specification provides a computer product comprised of a readable medium configured to store a plurality of programming instructions executable on a computer; said programming instructions comprising the method of any of the foregoing.

### BRIEF DESCRIPTION OF THE DRAWINGS

Figure 1 shows a schematic representation for supporting polymorphic elements at run-time in portable computing devices.

Figure 2 shows a schematic representation of the portable computing device of Figure 1.

Figure 3 shows an example of the Document Type Definition associated wih the content stored on the server of Figure 1.

Figure 4 shows an example of the enhanced component shown in Figure 1.

Figure 5 shows an example of the binding profile shown in Figure 1.

Figure 6 shows a flowchart depicting a method for supporting polymorphic elements at run-time in a portable computing device.

Figure 7 shows a flowchart depicting a method for developing applications that support polymorphic elements at run-time in a portable computing device.

### DESCRIPTION OF PREFERRED EMBODIMENTS

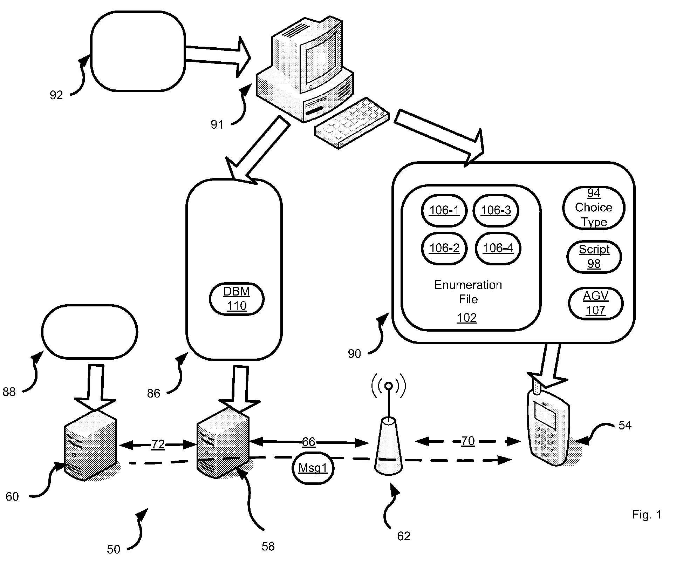

Referring now to Figure 1, a system for supporting polymorphic elements at run-time in portable computing devices is indicated generally at 50. In a present embodiment system 50 comprises at least one portable computing device 54, a mediation server 58 and a backend server 60. A wireless base station 62 interconnects computing device 54 and mediation server 58.

A backhaul link 66 connects base station 62 with server 58. Backhaul link 66 can be based on a broader network infrastructure such as the Internet.

A wireless link 70 connects base station 62 with computing device 54. Link 70 can be based on a variety of protocols, including, without limitation, Global System for Mobile communications (GSM), General Packet Radio Service (GPRS), Enhanced Data Rates for GSM Evolution (EDGE), 3G, 4G, Universal Mobile Telecommunications System (UMTS), Institute of Electrical and Electronics Engineers (IEEE) Standard 802.11, IEEE 802.15, Bluetooth.

A wide area link 72 connects server 58 to server 60. Wide area link 72 can also be based on a broader network infrastructure such as the Internet.

Mediation server 58 is configured to maintain a mediation module 86 which will be discussed further below.

Backend server 60 is configured to maintain backend services 88. Backend services 88 can include, for example, any type of application, service, web service or data or combinations thereof. Where a web service, backend services 88 can be configured to conform with the Web Services Description Language (WDSL). Back end services 88 will be discussed in greater detail below.

Computing device 54 is configured to maintain and execute a client application 90 which, as will be discussed further below, can access mediation module 86 and backend services 88.

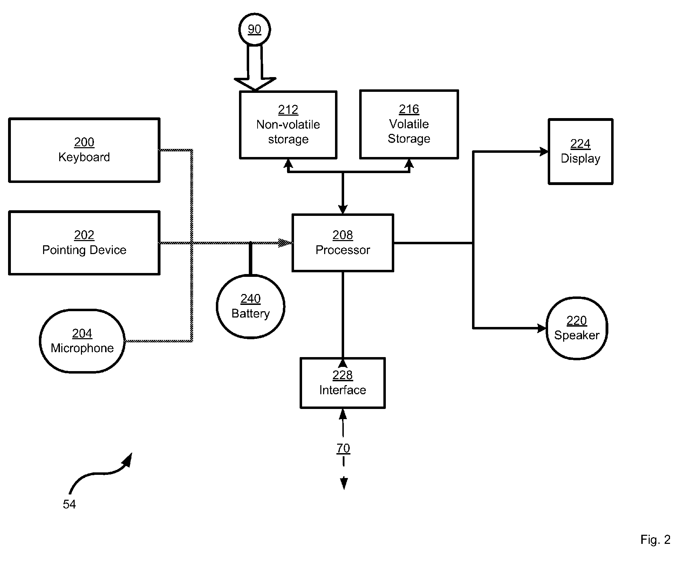

Referring briefly now to Figure 2, computing device 54 can be any type of electronic device that can be used in a self-contained manner and to interact with backend services 88. Interaction includes displaying of information on computing device 54 as well as to receive input at computing device 54 that can in turn be sent back over network 74. It should be emphasized that the structure in Figure 2 is purely exemplary, and contemplates a device that be used for both wireless voice (e.g. telephony) and wireless data (e.g. email, web browsing, text) communications. In a present embodiment, computing device 54 is a mobile electronic device with the combined functionality of a personal digital assistant, a cell phone, and an email paging device. Many well known cellular telephone models, or variants thereof, are suitable for the present embodiment.

Device 54 thus includes a plurality of input devices which in a present embodiment include a keyboard 200, a pointing device 202, and a microphone 204. Pointing device 202 can be implemented as a track wheel, trackball, touch-screen or the like. Input from keyboard 200, pointing device 202 and microphone 204 is received at a processor 208. Processor 208 is configured to communicate with a non-volatile storage unit 212 (e.g. Erasable Electronic Programmable Read Only Memory ("EEPROM"), Flash Memory) and a volatile storage unit 216 (e.g. random access memory ("RAM")). Programming instructions that implement the functional teachings of device 54 as described herein are typically maintained, persistently, in non-volatile storage unit 212 and used by processor 208 which makes appropriate utilization of volatile storage 216 during the execution of such programming instructions. Those skilled in the art will now recognize that non-volatile storage unit 212 and volatile storage 216 are examples of computer readable media that can store programming instructions executable on processor 208.

Processor 208 in turn is also configured to control a speaker 220 and a display 224. Processor 208 also connects to a network interface 228, which are implemented in a present embodiment as radios configured to communicate over link 70. In general, it will be understood that interface 228 is configured to correspond with the network architecture that is used to implement link 70. (In other embodiments a plurality of links 70 with different protocols can be employed and thus a plurality of interfaces can be provided to support each link.) It should be understood that in general a wide variety of configurations for device 54 are contemplated.

In a present embodiment, device 54 is also configured to maintain client application 90. Client application 90 can be any type of application that is configured to access content from backend services 88 in order to fulfill its function. For example, where client application 90 is Google Maps, then backend services 88 would comprise maps.

Client application 90 is maintained within non-volatile storage 212. Processor 208 is configured to execute client application 90, receive input from keyboard 200 relative to client application 90, and to generate graphical interfaces on display 224. Processor 208 is further configured to access backend services 88 on behalf of client application 90, as will be discussed further below.

Device 54 also includes a battery 240 or other power supply. Battery 240 provides power to components within device 54.

Referring again to Figure 1, server 58 and server 60 can be based on any well-known server environment including a module that houses one or more central processing units, volatile memory (e.g. random access memory), persistent memory (e.g. hard disk devices) and network interfaces to allow server 58 to communicate over relevant links. For example, server 58 or server 60 or both can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for server 58 and server 60 are contemplated. Those skilled in the art will now recognize that non-volatile storage and volatile storage are examples of computer readable media that can store programming instructions executable on the processor of server 58 or the processor of server 60.

Note that mediation server 58 can be part of the Relay component of a Blackberry^{™} wireless infrastructure from Research In Motion Inc., of Waterloo, Ontario, Canada, but this is a non-limiting example. Mediation server 58 can thus be part of an Mobile Data Services (MDS) server, a Blackberry Internet Server, a Blackberry Enterprise Server, an attachment server for a Blackberry infrastructure or the like. Likewise mediation module 86 can be part of the MDS services that execute on an MDS server.

System 50 also comprises an application development computing device 91. Computing device 91 is configured to execute a development tool 92. Computing device 91 is configured to be operated by a developer to create mediation module 86 or client application 90 or both. Computing device 91 can be based on any known desktop or laptop computing environment including a module that houses one or more central processing units, volatile memory (e.g. random access memory), persistent memory (e.g. hard disk devices) and network interfaces to allow computing device 91 to communicate, directly or indirectly, with server 58 to deploy mediation module 86 and device 54 to deploy client application 90. A variety of computing environments for computing device 91 are contemplated. Those skilled in the art will now recognize that non-volatile storage and volatile storage are examples of computer readable media that can store programming instructions executable on the processor of computing device 91.

Development tool 92 can be part of a broader Integrated Development Environment (IDE) that executes on computing device 91, which can be used to create mediation module 91 for deployment on server 58, or to create application 89 for deployment on device 54, or both. Development tool 92 is configured to receive instructions from a developer operating computing device 91 to dynamically respond to programming instructions representing polymorphic elements (such as "any" or "anyType" fields) for application 90 that a developer may wish to employ in relation to management of a message Msg1 received at device 54 from backend server 60. Development tool 92 is configured to respond to polymorphic elements and provide a mapping to a known set of uniform data components for client application 90, or to any complex type or element defined in the XML schemas used in development of mediation module 86. If there are new types or elements in mediation module 86 which have not been bound yet to data components, then development tool 92 is configured to create a new set of corresponding data components.

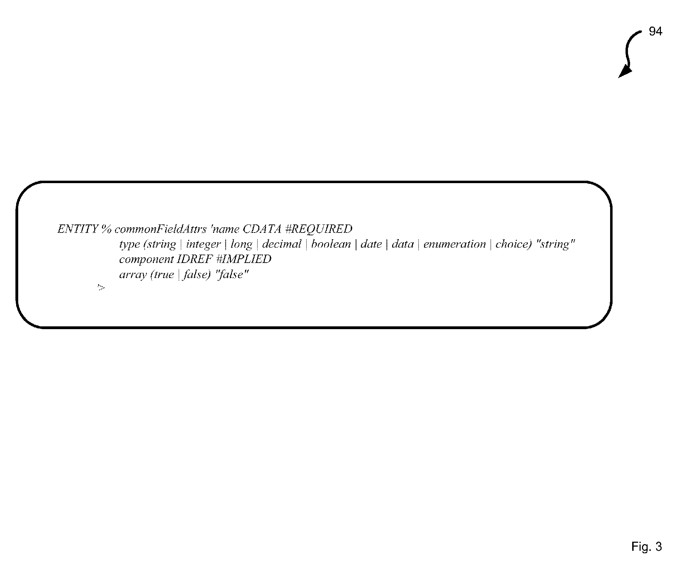

Referring again to Figure 1, client application 90 is developed using tool 92 and deployed so as to include a novel type, referred to herein as choice type 94. An exemplary Document Type Definition (DTD) for choice type 94 is shown in Figure 3. In the example in Figure 3, the "choice" definition has two attributes - type and value.

Referring again to Figure 1, the attributes in choice type 94 can be accessed in a script 98. When client application 90 is developed using tool 92, and the developer chooses to associate data definitions with the choice defined in choice type 94, an enumeration of selected choices can be recorded in a definition file, referred to herein as enumeration file 102. A new choice data is declared and the type of this choice is the defined enumeration. Fields (in messages such as message Msg1 handled by device 54) according to choice type 94 do not have a data mapping, but the mapping of a field to a choice is done through script 98, as discussed later below. During development using tool 92, a choice value respective to choice type 94 is associated to the list of data components 106-1, 106-2, 106-3, 106-4 and from a schema associated with backend services 88.

Also during development of client application 90 using tool 92, client application 90 is dynamically configured to obviate or mitigate polymorphic elements such as "any" or "anyType". Tool 92 is configured such that, upon detection of use of a polymorphic element, tool 92 prompts the developer to provide an association of the expected "any" values to the possible values that would correspond to the actual expected contents of a message Msg1 from backend services 88. The developer-defined possible values are then incorporated into script 98 in place of the polymorphic element. Script 98 can be a European Computer Manufacturers Association (ECMA) script. At run-time of client application 90 on device 54, script 98 is configured to be associated to the arrival of a message Msg1, which itself can be a response message or notification from backend server 60. During development of client application 90 using tool 92, the use of a polymorphic element in the development environment is detected, and the developer is prompted to select possible choices for populating the polymorphic element for collection into an application global variable 107.

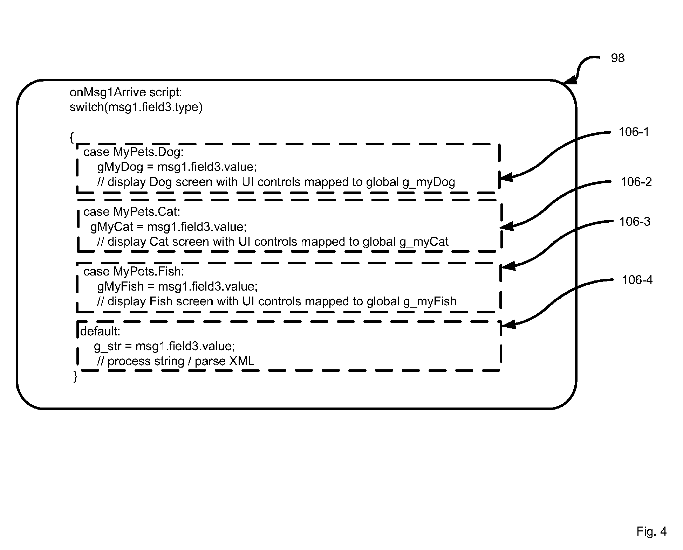

In a present illustrative, example global variable 107 is used later to render that field on display 224 of device 54. Consistent therewith, in script 98, Dog, Cat, Fish and Default are data components that are also defined in enumeration file 102 that is generated by tool 98. In this example, enumeration file 102 is called "MyPets". Enumeration file 102 "MyPets" therefore contains Dog, respective to data component 106-1; Cat, respective to data component 106-2; Fish, respective to data component 106-3; and default, respective to data component 106-4. Choice type 94 is defined such that ABCData is of type Choice, and ABC.type=MyPets, and ABC.value is therefore one of the components defined in enumeration file 102 "MyPets". Figure 4 shows an example of script 98 that is consistent with this illustrative example, wherein it is assumed that message Msg1 includes these parameters:
field1 : string
field2 : int
field3 : ABC

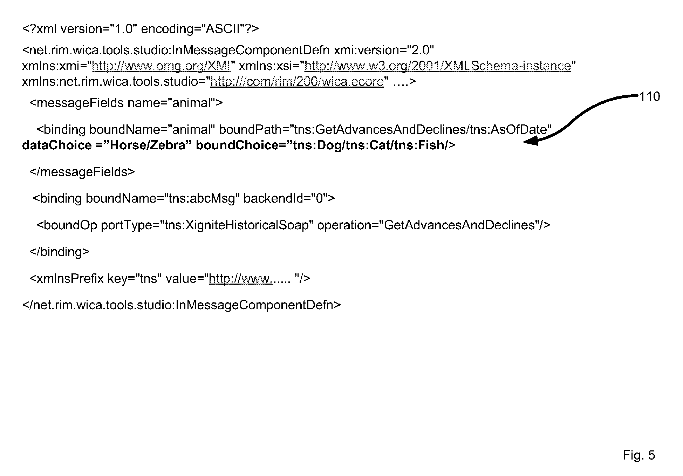

Mediation module 86 can also comprise a datasource binding model 110 for recording the association of each choice with its list of data components. (Datasource binding model 110 can also be considered a mapping model.) Datasource binding model 110 can comprise actual names of the elements (from backend services 88) expected in the XML associated with mediation module 86, in the event that those actual names (from backend services 88) are different from names of data component 106-1, 106-2, 106-3, 106-4. Datasource binding model 110 provides enhanced support by binding each of the Choice components in choice type 94 with data components 106-1, 106-2, 106-3, 106-4. An example of such a datasource binding model 110, consistent with the foregoing illustrative example, is shown in Figure 5. In datasource binding model 110, the data choices of Horse or Zebra is bound to the data components for Dog, Cat or Fish.

(At runtime, when a real message arrives from backend server 60, mediation module 86 is configured to attempt to match the real data passed into the message from backend server 60 with what has been defined in the choice. If no match is found, a reserved value of zero 0 is passed, indicating to device 54 that device 54 should parse that XML string itself. This is a rare or "worst-case" scenario as in most situations a match can be found.)

As can be seen in Figure 5, the extension to data source binding model 110 is a pair of attributes "dataChoice" representing the list of data components associated with server 58, and "boundChoice" representing the list of components (or complex types or elements) discovered in the schemas used by mediation module 86 respective the description language used in associated with backend services 88. An example of such a description language is the web services description language (WSDL).

At runtime, server 58 parses the data source binding information using data source bind model 110 and locates the data components 106-1, 106-2, 106-3, 106-4 (or the types or the elements respective to data components 106-1, 106-2, 106-3, 106-4) corresponding to choice type 94. When an association between a choice and a data component (or type or element) is not found, application 90 is configured to return the XML string containing the "any" definition. Such "unresolved" XML strings corresponding to "any" types are then parsed on device 54 in the usual manner.

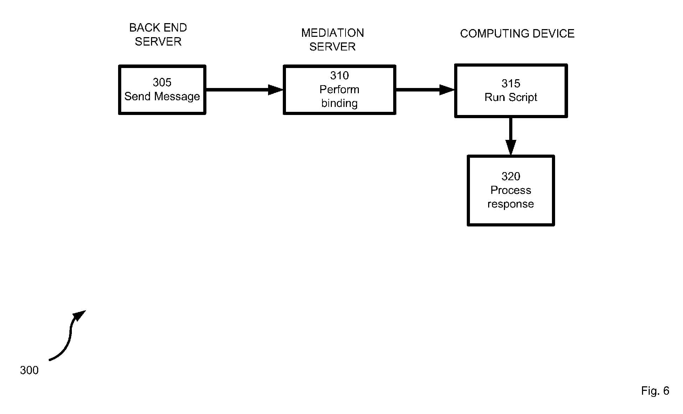

Referring now to Figure 6, a flowchart depicting a method for supporting polymorphic elements at run-time in portable computing devices is indicated generally at 300. Method 300 can be implemented on system 50 or a suitable variation thereof.

Block 305 comprises sending a message from a backend server, which in turn is received at a mediation server. In a present embodiment message Msg1 is sent from backend server 60 to server 58 via link 82. The means by which message Msg1 is not particularly limited, and can be in response to a request from application 90, or can be a notice sent to application 90. In the present example, assume that message "Msg1 as originating from backend server 60 and destined for server 58 has the following 3 fields:
field1: a string, "My First Pet"
field 2: an integer value "10"
field 3: XML description of a type "Dog", having the following contents: <Dog name="Tom" age=5 type="bulldog" />.

At block 310, server 58 has received the message from block 305 and performs binding thereon. Such binding is performed using data binding model 110 as per the example above. As a result of performing blocks 310 using the example message Msg1, server 58 forwards message Msg1 to device 58. In the present example, assume that message Msg1 after performance of the binding from block 310 has the same contents as originating from backend server 60, as mediation module 86 defined a similar structure for Dog, as a data component 106.

At block 315, message Msg1 has been receive at device 54. Block 315 comprises running a script that corresponds to the message. Block 315 in the present example comprises execution of script 98. In the present example, the "Dog" case of script 98 is satisfied, and the instruction to "display Dog screen with UI controls mapped to global g_myDog". (Where UI means user interface).

Block 320 comprises processing the results of the script performance form block 315. In the present example, the response is processed by generating, on display 224 a screen showing a dog with user interface controls that are mapped according to the global variable g_myDog.

Note that if, on another performance of method 300, message Msg1 has no recognizable content (i.e., Dog, Fish or Cat), then the default case of script 98 is satisfied and message Msg1 will be parsed in the usual manner of parsing polymorphic elements, although with typically reduced speed and performance of device 54 as processor 208 is consumed with such parsing.

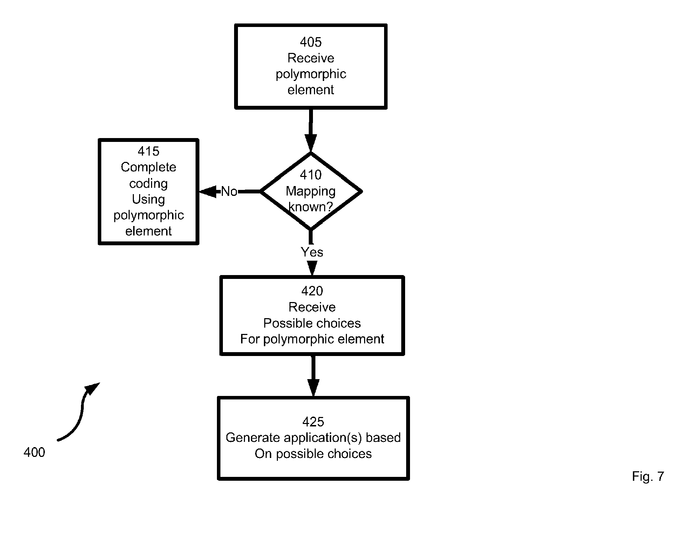

Referring now to Figure 7, a flowchart depicting a method for developing applications that support polymorphic elements at run-time in portable computing devices is indicated generally at 400. Method 400 can be implemented on computing device 91 and incorporated into tool 92 or suitable variations thereof. Method 400 is assumed to occur within the context of operation of tool 92 for the development of application 90 or mediation module 86 which are being configured to access backend services 88 when application 90 is deployed on device 54.

Block 405 comprises receiving a polymorphic element. Block 405 occurs within the context of a full range of ongoing development functions that occur within tool 92, and tool 92 can be used without invocation of method 400 at all. However, block 405 is invoked at a point during operation of tool 92 that a polymorphic element is received in tool 92 as part of developing application 90 or mediation module 86 or both.

At block 410, a determination is made as to whether a mapping for the polymorphic element received at block 405 is known. Block 410 can be effected by tool 92 generating a dialogue box or other querying mechanism asking the developer operating device 91 whether or not that developer is aware of the particular contents which may be received in a message Msg1 in association with the polymorphic element.

If a "no" response is received at block 410 then at block 415 coding of application 90 or mediation module 86 or both continues using tool 92 using the polymorphic element in the usual manner.

If a "yes" response is received at block 410 then at block 420, the possible choices for the particular contents that may be received in association with the polymorphic element are received. A developer performing block 420 can access any specification associated with backend services 88 to ascertain the possible contents that would have been returned in a message (such as message Msg1) that was to be handled using the polymorphic element at block 405. In the example above, the possible contents would include Dog, Cat, Fish and default, and thus these would be provided along with grammar and syntax specifications as part of block 420.

Block 425 comprises generation of application(s) based on the possible choices received at block 420. Block 425 can comprise generation of an application such as application 90 or a mediation module such as mediation module 86 or both. In the present example, one or more of choice type 94, script 98, datasource binding model 110, enumeration file 102, data components 106-1, 106-2, 106-3, 106-4 and other aspects of application 90 and mediation module 86 can be generated as part of block 425. Upon such generation of application(s), those applications can then be deployed as discussed above.

In another embodiment, a quickstart extension is provided as part of tool 92, which when executed on computing device 91, is configured to generate screens on device 91 for all elements associate to polymorphic element such as "any" or "anyType" fields, which provides navigation to a screen for generation on the screen of device 91, based on the type received.

The quickstart extension is configured to generate, for each possible message Msg1 having fields of type "any" or "anyType", a "Details" button (or the like) on the screen of device 91. The "Details" button is configured, on selection, to call a script responsible for displaying the appropriate screen based on the value of the application global variable 107 and thereby permit automatic generation of script 98 by automatically populating the possible cases that could be satisfied within script 98 corresponding to data components 106-1, 106-2, 106-3, 106-4.

For further illustration, below is an example portion of script 98 that relates to the foregoing example.

.....

if (gMyCat != null) {

scrCat.display()

} else if (gMyDog != null) {

scrDog.display()

}

In this example of script 98, script 98 ensures a corresponding global variable is created, depending on the real type arrived in message Msg1 from backend server 60. For example, if the real type corresponding to "any" or "anyType" is a "Cat" type, then at runtime, script 98 creates a global variable named gMyCat and the screen for rendering the fields of the type "Cat" is displayed on display 224. This screen is named "scrCat" in this example of script 98. Those skilled in the art will now appreciate real type corresponding to "any" or "anyType" is a "Dog" type.

Combinations and subsets of the variations are also contemplated. The claims attached hereto define the scope of the monopoly sought.

## Claims

1. A computer implemented method of developing an application for a computing device that accesses backend services, , said method comprising:
receiving input data via an input device of a computing apparatus;
processing said input data in a software programming tool to determine whether said input data can be recognized by said software programming tool as a polymorphic element;
generating a query from said software programming tool at an output device of said computing apparatus asking if a mapping to possible choices for a recognized polymorphic element is known;
receiving response data via said input device indicating whether or not said mapping is known; and
if said mapping is not known then further generating said application using said software programming tool using said polymorphic element; and
if said mapping is known then receiving further response data via said input device identifying said mapping; and
further generating said application using said software programming tool using one or more uniform elements in substitution for said polymorphic element.

2. The method of claim 1 wherein said polymorphic element is one of an any or anyType element.

3. The method of claim 1 wherein said application is generated with a choice type that is associated with a list of data components and a schema respective to said backend services.

4. The method of claim 1 further comprising: upon recognizing a polymorphic element in the development environment, collecting said response data for said mapping into an application global variable; said application global variable being incorporated into said generating of said application.

5. The method of claim 1 further comprising: upon recognizing a polymorphic element in the development environment, using said mapping to generate data components for incorporation into said application.

6. The method of claim 1 wherein said mapping comprises defined possible values which are incorporated into a script in place of said recognized polymorphic element; said script being incorporated into said application.

7. The method of claim 6 wherein said script is a European Computer Manufacturers Association script.

8. The method of claim 6 wherein said script is configured to be associated with the arrival of a message at said computing device from said backend services.

9. The method of claim 8 wherein said message is a response message or notification from said backend services.

10. The method of claim 1 wherein said method further comprises generating a mediation module for deployment in a mediation server; said mediation server residing between said device and said backend services; said mediation module including a data binding module corresponding to said mapping.

11. The method of claim 10 wherein said data binding module is configured to record the association of each choice with its list of data components.

12. A computer having one or input devices, one or more output devices, and storage interconnected by a processor, said processor configured to perform the method of any one of claims 1-11.

13. A mediation server configured to maintain a mediation module generated according to a method of any one of claims 10-11.

14. A system comprising the computer of claim 12 and a server for hosting the backend services of claim 1 and a mediation server according to claim 13.

15. A computer readable medium configured to store a plurality of programming instructions executable on a computer; said programming instructions comprising the method of any one of claims 1-11.

## Amended claims

### Amended claims in accordance with Rule 137(2) EPC.

**1.** A computer implemented method of developing a client application using an integrated development environment (IDE) for a computing device that accesses a server via a network, said method comprising:
receiving input data representing programming instructions via an input device of a computing apparatus;
responding to said input data using a software development tool within said IDE to determine whether said programming instructions comprise a polymorphic element;
generating a query from said software development tool at an output device of said computing apparatus asking if a mapping to possible choices of data components for said polymorphic element is known;
receiving response data via said input device indicating whether or not said mapping is known; and
if said mapping is not known then further developing said application using said IDE using said polymorphic element; and
if said mapping is known then receiving response data via said input device identifying data components corresponding to said choices and
then further developing said application using said IDE using said data components in substitution for said polymorphic element.

**2.** The method of claim 1 wherein said polymorphic element is one of an any or anyType element as defined in the XML Schema specification.

**3.** The method of claim 1 wherein said application is generated with a choice type that is associated with a list of data components and a schema respective to an application, service or data hosted by said server.

**4.** The method of claim 1 wherein said data components which are incorporated into a script in place of said polymorphic element; said script being incorporated into said application.

**5.** The method of claim 4 wherein said script is a European Computer Manufacturers Association script.

**6.** The method of claim 4 wherein said script is configured to be associated with the arrival of a message at said computing device from said server.

**7.** The method of claim 6 wherein said message is a response message or notification from said backend services.

**8.** The method of claim 1 wherein said method further comprises generating a mediation module for deployment in a mediation server; said mediation server residing between said device and said backend services; said mediation module including a data binding module corresponding to said data components.

**9.** The method of claim 8 wherein said data binding module is configured to record the association of each choice with its list of data components.

**10.** A computer having one or input devices, one or more output devices, and storage interconnected by a processor, said processor configured to perform the method of any one of claims 1-9.

**11.** A mediation server configured to maintain a mediation module generated according to a method of any one of claims 1-9.

**12.** A system comprising the computer of claim 10 and a server for hosting the backend services of claim 1 and a mediation server according to claim 11.

**13.** A computer readable medium configured to store a plurality of programming instructions executable on a computer; said programming instructions comprising the method of any one of claims 1-9.
